# EUROPÄISCHE PATENTANMELDUNG

(11) **EP 4 163 233 A1**
(43) Veröffentlichungstag der Anmeldung: **12.04.2023**
(21) Anmeldenummer: 22197429.8
(22) Anmeldetag: 23.09.2022
(51) Int. Cl.: B65G 13/00, B65G 39/00, B65G 21/12

(54) **ROLLENBAHNSYSTEM UND VERFAHREN ZUM VERBRINGEN EINES ROLLENBAHNSYSTEMS VON EINEM BETRIEBSZUSTAND IN EINEN WARTUNGSZUSTAND**

(30) Priorität: 08.10.2021 DE 102021211398; 22.12.2021 DE 102021214928
(71) Anmelder: thyssenkrupp Automotive Body Solutions GmbH, 74076 Heilbronn (DE); thyssenkrupp AG, 45143 Essen (DE)
(72) Erfinder: Kipping, Tino, 66839 Schmelz (DE)
(74) Vertreter: thyssenkrupp Intellectual Property GmbH

(57) **Zusammenfassung**

Rollenbahnsystem (1) zur Förderung von Fördergut umfassend ein Gestell (4) und an dem Gestell (4) angeordnete Rollenbahnen (2, 3), wobei das Rollenbahnsystem (1) ausgebildet ist, einen Betriebszustand (B) und einen Wartungszustand (W) einzunehmen, wobei wenigstens eine der Rollenbahnen (3) in dem Betriebszustand (B) in einer Betriebsposition (BP) angeordnet ist und die wenigstens eine Rollenbahn (3) in dem Wartungszustand (W) in einer von der Betriebsposition (BP) abweichenden Wartungsposition (WP) angeordnet ist. In der Wartungsposition ist dann vorteilhafterweise ein Bereich freigegeben, der zur Durchführung einer Wartung genutzt werden kann. Verfahren zum Verbringen eines Rollenbahnsystems (1) von einem Betriebszustand (B) in einen Wartungszustand (W), wobei die Rollenbahnen (2, 3) in dem Betriebszustand (B) in einer Betriebsposition (BP) angeordnet sind, und eine der Rollenbahnen (3) von der Betriebsposition (BP) in eine von der Betriebsposition (BP) abweichende Wartungsposition (WP) verbracht wird.

## Beschreibung

Die Erfindung betrifft ein Rollenbahnsystem zur Förderung von Fördergut umfassend ein Gestell und an dem Gestell angeordnete Rollenbahnen. Solch ein Rollenbahnsystem wird mitunter auch nur als Rollenbahn bezeichnet. Des Weiteren betrifft die Erfindung ein Verfahren zum Verbringen eines Rollenbahnsystems mit an einem Gestell angeordneten Rollenbahnen von einem Betriebszustand in einen Wartungszustand.

Im Stand der Technik ist ein Rollenbahnsystem beispielsweise aus der DD 279 454 A1 bekannt. Bei den bekannten Rollenbahnsystemen sind die einzelnen Rollenbahnen fix auf einem Gestell angeordnet. An den Außenseiten eines solchen Rollenbahnsystems muss ein Wartungsbereich freibleiben, damit Wartungsarbeiten an dem Rollenbahnsystem beziehungsweise an Komponenten des Rollenbahnsystems und/oder an Vorrichtungen, die unterhalb des Rollenbahnsystems angeordnet sind, durchgeführt werden können. Vorrichtungen, die unterhalb des Rollenbahnsystems angeordnet sind, sind insbesondere Vorrichtungen, die im Zusammenhang mit der Handhabung und/oder der Bearbeitung des von dem Rollenbahnsystem geförderten Förderguts stehen, beispielsweise die Antriebseinheit eines Roboterarms.

Vor diesem Hintergrund ist es eine Aufgabe der vorliegenden Erfindung, ein eingangs genanntes Rollenbahnsystem zu verbessern, vorteilhafterweise derart zu verbessern, dass der Raum seitlich des Rollenbahnsystems nutzbar wird und dennoch weiterhin die Wartungsarbeiten an dem Rollenbahnsystem und/oder an einer Vorrichtung, die unterhalb des Rollenbahnsystems angeordnet ist, durchgeführt werden können.

Zur Lösung dieser Aufgabe werden ein Rollenbahnsystem und ein Verfahren zum Verbringen eines Rollenbahnsystems mit auf einem Gestell angeordneten Rollenbahnen von einem Betriebszustand in einen Wartungszustand gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Rollenbahnsystem zur Förderung von Fördergut, insbesondere von Paletten, Kisten, Bauteilen und/oder Werkstückträgern, vor, umfassend ein Gestell, insbesondere ein Untergestell, und an dem Gestell angeordnete Rollenbahnen, insbesondere auf dem Gestell angeordnete Rollenbahnen. Das Rollenbahnsystem ist dabei ausgebildet, einen Betriebszustand und einen Wartungszustand einzunehmen, wobei wenigstens eine der Rollenbahnen in dem Betriebszustand in einer Betriebsposition angeordnet ist und die wenigstens eine Rollenbahn in dem Wartungszustand in einer von der Betriebsposition abweichenden Wartungsposition angeordnet ist. Anstelle des Begriffs Betriebsposition kann auch der Begriff Arbeitsstellung und anstelle des Begriffs Wartungsposition kann auch der Begriff Wartungsstellung verwendet werden. In dem Betriebszustand ist dabei vorteilhafterweise eine Förderung des Förderguts ermöglicht. In dem Wartungszustand ist vorteilhafterweise eine Durchführung einer Wartung an dem Rollenbahnsystem und/oder an einer Vorrichtung, die unterhalb des Rollenbahnsystems angeordnet ist, ermöglicht. Das vorgeschlagene Rollenbahnsystem sieht also vorteilhafterweise vor, dass nicht sämtliche Rollenbahnen des Rollenbahnsystems fix und nicht verstellbar mit dem Gestell verbunden sind, sondern dass zumindest eine Rollenbahn des Rollenbahnsystems zwischen einer Betriebsposition und einer Wartungsposition verstellt werden kann, insbesondere werkzeuglos verstellt werden kann. Vorteilhafterweise steht durch das Anordnen dieser wenigstens einen Rollenbahn in der Wartungsposition selbst bei einer Nutzung des Raums um das Rollenbahnsystem, Platz für die Durchführung einer Wartung zur Verfügung. So sieht eine besonders vorteilhafte Ausgestaltung des Rollenbahnsystems vor, dass in dem Wartungszustand ein Wartungsbereich, der in dem Betriebszustand von zumindest einer Rollenbahn blockiert ist, zugänglich ist.

Insbesondere ist vorgesehen, dass das Gestell des Rollenbahnsystems Tragelemente umfasst, auf denen die Rollenbahnen aufliegen. Die Tragelemente sind dabei insbesondere beabstandet voneinander aufeinanderfolgend angeordnet, insbesondere in Abständen von mehr als 1000 mm (mm: Millimeter), wobei zwischen den Tragelementen vorteilhafterweise Freiräume bestehen, die insbesondere zur Durchführung der Wartungsarbeiten genutzt werden können, wenn die wenigstens eine Rollenbahn in der Wartungsposition angeordnet ist. Insbesondere sind zudem in den Freiräumen Vorrichtungen oder Teile von Vorrichtungen angeordnet, die zur Handhabung und/oder zur Bearbeitung des von dem Rollenbahnsystem geförderten Förderguts stehen. Insbesondere kann eine Antriebseinheit für einen Industrieroboter zumindest teilweise in einem solchen Freiraum unterhalb der Rollenbahnen angeordnet sein.

Die Rollenbahnen des Rollenbahnsystems sind insbesondere parallel zueinander angeordnet. Bevorzugt umfasst das Rollenbahnsystem zwei parallel zueinander angeordnete Rollenbahnen. Vorteilhafterweise sind die Rollenbahnen als Holm mit darin angeordneten Rollen, über die ein Fördergut gefördert werden kann, ausgebildet. Das Rollenbahnsystem umfasst vorzugsweise eine Antriebseinheit zum Antreiben von Rollen der Rollenbahnen. Ein Fördergut kann somit vorteilhafterweise aktiv auf dem Rollenbahnsystem gefördert werden. Insbesondere ist weiter vorgesehen, dass das Rollenbahnsystem eine erste Rollenbahn und eine zweite Rollenbahn als die Rollenbahnen umfasst. Die erste Rollenbahn ist dabei vorzugsweise feststehend in Bezug auf das Gestell ausgebildet. Das heißt, die Position der ersten Rollenbahn kann bezogen auf das Gestell nicht verändert werden, und die erste Rollenbahn entsprechend nicht in eine Wartungsposition verbracht werden. Die erste Rollenbahn ist somit stets in einer Betriebsposition.

Insbesondere ist vorgesehen, dass das Rollenbahnsystem als Teil eines sogenannten Skid-Systems ausgebildet ist. Dabei ist das Rollenbahnsystem insbesondere zur Förderung von Motoren, Getrieben und/oder Karosserieteilen ausgebildet, insbesondere unter Verwendung eines entsprechend ausgebildeten Werkstückträgers.

Gemäß einer weiteren vorteilhaften Ausgestaltung ist das Rollenbahnsystem ausgebildet, die wenigstens eine Rollenbahn zu verschwenken, insbesondere relativ zu dem Gestell zu verschwenken. Insbesondere ist vorgesehen, dass das Rollenbahnsystem ausgebildet ist, die zweite Rollenbahn zu verschwenken. Durch das Verschwenken der wenigstens einen Rollenbahn wird die wenigstens eine Rollenbahn vorteilhafterweise von der Betriebsposition in die Wartungsposition verbracht. Nach erfolgter Wartung wird die wenigstens eine Rollenbahn vorteilhafterweise durch das Verschwenken von der Wartungsposition zurück in die Betriebsposition verbracht. Vorteilhafterweise umfasst das Rollenbahnsystem für das Verschwenken der wenigstens einen Rollenbahn wenigstens eine Verschwenkvorrichtung, insbesondere wenigstens einen Verschwenkarm. Die Verschwenkvorrichtung ist dabei insbesondere an dem Gestell angeordnet. Gemäß einer weiteren vorteilhaften Ausgestaltung umfasst das Gestell wenigstens einen Verschwenkarm, insbesondere zwei, drei, vier oder fünf Verschwenkarme, wobei der wenigstens einen Verschwenkarm orthogonal zu einer Längserstreckungsrichtung der Rollenbahnen ausgerichtet ist, und wobei das Rollenbahnsystem vorteilhafterweise ausgebildet ist, die wenigstens eine Rollenbahn mittels des wenigstens einen Verschwenkarms zu verschwenken, insbesondere nach oben zu verschwenken, insbesondere entlang einer Kreisbahn. Insbesondere ist vorgesehen, dass die zweite Rollenbahn verschwenkbar ausgebildet ist und die erste Rollenbahn feststehend und nicht verschwenkbar ausgebildet ist.

Eine weitere vorteilhafte Ausgestaltungsvariante des Rollenbahnsystems sieht vor, dass das Rollenbahnsystem ausgebildet ist, die wenigstens eine Rollenbahn zu verschieben, insbesondere relativ zu dem Gestell zu verschieben. Insbesondere ist vorgesehen, dass die zweite Rollenbahn verschiebbar ausgebildet ist und die erste Rollenbahn feststehend und nicht verschiebbar ausgebildet ist. Dabei wird die erste Rollenbahn vorteilhafterweise zum Verbringen aus der Betriebsposition in die Wartungsposition hin zu der ersten Rollenbahn verschoben. Durch das Verschieben der wenigstens einen Rollenbahn wird die wenigstens eine Rollenbahn vorteilhafterweise von der Betriebsposition in die Wartungsposition verbracht. Nach erfolgter Wartung wird die wenigstens eine Rollenbahn vorteilhafterweise durch das Verschieben von der Wartungsposition zurück in die Betriebsposition verbracht. Vorteilhafterweise umfasst das Rollenbahnsystem für das Verschieben der wenigstens einen Rollenbahn wenigstens eine Verschiebevorrichtung. Die Verschiebevorrichtung ist dabei insbesondere an dem Gestell angeordnet. Gemäß einer weiteren vorteilhaften Ausgestaltung umfasst das Gestell wenigstens eine Führungsschiene, insbesondere zwei, drei, vier oder fünf Führungsschienen, die insbesondere orthogonal zu einer Längserstreckungsrichtung der Rollenbahnen ausgerichtet ist. Das Rollenbahnsystem ist dabei vorteilhafterweise ausgebildet, die wenigstens eine Rollenbahn über die wenigstens eine Führungsschiene zu verschieben. Die wenigstens eine Führungsschiene kann dabei die wenigstens eine Verschiebevorrichtung sein. Gemäß einer Ausgestaltungsvariante ist zudem vorgesehen, dass die Rollenbahnen des Rollenbahnsystems, insbesondere die erste Rollenbahn und die zweite Rollenbahn, zusammen verschoben werden können, sodass die relative Position der Rollenbahnen zueinander unverändert bleibt. Bei dieser Ausgestaltungsvariante werden die Rollenbahnen somit derart verschoben, dass zumindest eine der Rollenbahnen in der Wartungsposition nicht mehr direkt über dem Gestell angeordnet ist. Die Führung über die Führungsschiene kann dabei als Gleitführung, insbesondere nach Art einer Nut-Feder-Verbindung ausgestaltet sein. Insbesondere kann aber auch vorgesehen sein, dass die wenigstens eine verschiebbar ausgebildete Rollenbahn, insbesondere die zweite Rollenbahn, an der Unterseite zumindest eine Rolle umfasst, die auf der Führungsschiene beim Wechsel zwischen der Betriebsposition und der Wartungsposition abrollt. Insbesondere ist vorgesehen, dass das die wenigstens eine verschiebbar ausgebildete Rollenbahn auf einer mittleren Führungsschiene des Gestells mit einer unterseitig angebrachten Rolle angeordnet ist und an den äußeren Führungsschienen eine Gleitführung vorgesehen ist. Gemäß einer weiteren vorteilhaften Ausführungsform können durch das Verschieben auch mehrere unterschiedliche Arbeitsstellungen eingenommen werden, die an eine unterschiedliche Fördergutbreite angepasst sind. Insbesondere kann auch eine Antriebseinheit vorgesehen sein, um die wenigstens eine Rollenbahn von der Betriebsposition in die Wartungsposition zu verbringen und/oder um die wenigstens eine Rollenbahn von der Wartungsposition in die Betriebsposition zu verbringen.

Gemäß einer weiteren vorteilhaften Ausgestaltung, bei der das Rollenbahnsystem eine erste Rollenbahn und eine zweite Rollenbahn umfasst, weist das Rollenbahnsystem eine Antriebseinheit zum Antreiben von Rollen der Rollenbahnen auf, wobei die Antriebseinheit einen Antriebsmotor umfasst, der an der ersten Rollenbahn angeordnet ist, und mit dem die Rollen der ersten Rollenbahn angetrieben werden können. Vorteilhafterweise ist die erste Rollenbahn dabei feststehend in Bezug auf das Gestell angeordnet, sodass die erste Rollenbahn besonders gut zur Anordnung des Antriebsmotors geeignet ist. Weiter vorteilhaft umfasst die Antriebseinheit eine Antriebswelle, über die die Rollen der zweiten Rollenbahn mittels des Antriebsmotors angetrieben werden. Die Antriebswelle erstreckt sich dabei insbesondere ausgehend von der ersten Rollenbahn hin zu der zweiten Rollenbahn. Die Antriebswelle ist dabei vorteilhafterweise durch die erste Rollenbahn geführt. Insbesondere verläuft die Antriebswelle orthogonal zu einer Längserstreckungsrichtung der Rollenbahnen. In dem Fall, dass die zweite Rollenbahn verschiebbar ausgebildet ist, ist insbesondere vorgesehen, dass die Antriebswelle und die zweite Rollenbahn derart ausgebildet sind, dass die zweite Rollenbahn über die Antriebswelle verschoben werden kann, wobei die Antriebswelle die zweite Rollenbahn durchragt.

Gemäß einer vorteilhaften Ausgestaltungsvariante ist vorgesehen, dass die Antriebswelle teleskopierbar ausgebildet ist. Vorteilhafterweise wird die Antriebswelle dabei bei einem Verbringen der zweiten Rollenbahn von der Betriebsposition in die Wartungsposition zusammengestaucht und bei einem Verbringen der zweiten Rollenbahn von der Wartungsposition in die Betriebsposition entsprechend auseinandergezogen.

Eine weitere vorteilhafte Ausgestaltungsvariante sieht vor, dass die Antriebswelle einen ersten Antriebswellenabschnitt und einen zweiten Antriebswellenabschnitt umfasst, wobei der erste Antriebswellenabschnitt und der zweite Antriebswellenabschnitt über ein Gelenk, insbesondere ein Kardangelenk, miteinander verbunden sind. Vorteilhafterweise kann so vor einem Verbringen der zweiten Rollenbahn von der Betriebsposition in die Wartungsposition die Antriebswelle von der zweiten Rollenbahn gelöst werden, und die Antriebswelle mittels des Gelenks aus dem Verstellweg der zweiten Rollenbahn verbracht werden. Vorteilhafterweise ist der erste Antriebswellenabschnitt mit der ersten Rollenbahn verbunden und der zweite Antriebswellenabschnitt mit der zweiten Rollenbahn verbunden, wobei der erste Antriebswellenabschnitt vorteilhafterweise deutlich kürzer als der zweite Antriebswellenabschnitt ausgebildet ist, sodass die auf den ersten Antriebswellenabschnitt wirkenden Kräfte vorteilhafterweise gering sind, wenn der zweite Antriebswellenabschnitt in dem Wartungszustand über das Gelenk abgeklappt ist.

Vorteilhafterweise weist die die Antriebswelle ein Verbindungselement zur Verbindung der Antriebswelle mit der zweiten Rollenbahn auf, wobei die Verbindung zur Verbringung der zweiten Rollenbahn in die Wartungsposition lösbar ausgebildet ist. Vorteilhafterweise kann die Antriebswelle mittels des Verbindungselements wieder einfach mit der zweiten Rollenbahn verbunden werden, wenn die zweite Rollenbahn nach einer Wartung wieder von der Wartungsposition in die Betriebsposition verbracht ist. Vorteilhafterweise ermöglicht das Verbindungselement ein werkzeugloses Lösen und Wiederherstellen der Verbindung der Antriebswelle mit der zweiten Rollenbahn.

Gemäß einer weiteren vorteilhaften Ausgestaltung umfasst das Rollenbahnsystem eine Sicherungseinheit, die ausgebildet ist, die wenigstens eine Rollenbahn in der Betriebsposition und/oder in der Wartungsposition gegen ein unbeabsichtigtes Verstellen zu sichern. Somit ist vorteilhafterweise ein sicherer Betrieb des Rollenbahnsystems in dem Betriebszustand und das sichere Durchführen einer Wartung in dem Wartungszustand möglich, weil ein versehentliches Verbringen der wenigstens einen Rollenbahn aus der Betriebsposition beziehungsweise aus der Wartungsposition verhindert ist. Durch Bedienung und damit Aufhebung der Sicherung ist vorteilhafterweise ein Verstellen beziehungsweise ein Verschieben der Rollenbahn ermöglicht. Insbesondere ist vorgesehen, dass die Sicherungseinheit wenigstens eine Sensor umfasst, der signalisiert, wenn die wenigstens eine Rollenbahn, insbesondere die zweite Rollenbahn, in der Wartungsposition und/oder wenn die wenigstens eine Rollenbahn, insbesondere die zweite Rollenbahn, in der Betriebsposition ist. Weiter vorteilhaft umfasst die Sicherungseinheit eine Arretiervorrichtung, wobei zum Verbringen der wenigstens einen Rollenbahn aus der Betriebsposition beziehungsweise aus der Wartungsposition vorteilhafterweise eine Arretierung gelöst werden muss.

Insbesondere ist ein Rollenbahnsystem zur Förderung von Fördergut umfassend ein Untergestell und eine auf dem Untergestell angeordnete erste Rollenbahn und eine auf dem Untergestell angeordnete zweite Rollenbahn vorgesehen, wobei die zweite Rollenbahn relativ zu dem Untergestell verschiebbar ausgebildet ist. Gemäß einer weiteren Ausgestaltung ist auch die erste Rollenbahn relativ zu dem Untergestell verschiebbar ausgebildet, wobei gemäß einer Ausgestaltungsvariante die erste Rollenbahn feststehend in Bezug auf das Untergestell ausgebildet ist. Insbesondere ist die zweite Rollenbahn parallel zu der ersten Rollenbahn angeordnet. Vorteilhafterweise umfasst das Rollenbahnsystem eine Antriebseinheit zum Antreiben von Rollen der ersten Rollenbahn und/oder der zweiten Rollenbahn, wobei die Antriebseinheit vorteilhafterweise einen Antriebsmotor umfasst, der an der ersten Rollenbahn angeordnet ist, und mit dem die Rollen der ersten Rollenbahn angetrieben werden. Weiter vorteilhaft umfasst die Antriebseinheit eine Antriebswelle, über die die Rollen der zweiten Rollenbahn mittels des Antriebsmotors angetrieben werden. Eine weitere vorteilhafte Ausgestaltung sieht vor, dass das Untergestell zumindest eine Führungsschiene, insbesondere zwei, drei, vier oder fünf Führungsschienen, umfasst, die orthogonal zu der ersten Rollenbahn und der zweiten Rollenbahn und orthogonal zu einer Längserstreckungsrichtung des Rollenbahnsystems ausgerichtet ist, wobei die erste Rollenbahn und/oder die zweite Rollenbahn, vorzugsweise nur die zweite Rollenbahn, über die Führungsschiene verschiebbar angeordnet ist. Vorteilhafterweise kann das Rollenbahnsystem durch Verschieben der ersten Rollenbahn und/oder durch Verschieben der zweiten Rollenbahn von einer Arbeitsstellung in eine Wartungsstellung beziehungsweise von einer Wartungsstellung in eine Arbeitsstellung verbracht werden kann. Insbesondere umfasst das Rollenbahnsystem eine Sicherungseinheit, die ausgebildet ist, die erste Rollenbahn und/oder die zweite Rollenbahn in der Arbeitsstellung und/oder in der Wartungsstellung gegen ein unbeabsichtigtes Verschieben zu sichern.

Das des Weiteren vorgeschlagene Verfahren zum Verbringen eines Rollenbahnsystems mit an einem Gestell angeordneten Rollenbahnen von einem Betriebszustand in einen Wartungszustand, wobei die Rollenbahnen in dem Betriebszustand in einer Betriebsposition angeordnet sind, sieht vor, dass wenigstens eine der Rollenbahnen von der Betriebsposition in eine von der Betriebsposition abweichende Wartungsposition verbracht wird. Durch das Verbringen der wenigstens einen Rollenbahn von der Betriebsposition in eine von der Betriebsposition abweichende Wartungsposition wird also vorteilhafterweise das Rollenbahnsystem von dem Betriebszustand, in dem ein Fördergut von dem Rollenbahnsystem gefördert werden kann, in den Wartungszustand versetzt, in dem eine Wartung an dem Rollenbahnsystem und/oder an einer Vorrichtung, die unterhalb des Rollenbahnsystems angeordnet ist, durchgeführt werden kann.

Gemäß einer vorteilhaften Ausgestaltung des Verfahrens wird die wenigstens eine Rollenbahn von der Betriebsposition in die Wartungsposition verschwenkt, insbesondere mittels wenigstens einer Verschwenkvorrichtung des Rollenbahnsystems. Gemäß einer weiteren vorteilhaften Ausgestaltung des Verfahrens wird die wenigstens eine Rollenbahn von der Betriebsposition in die Wartungsposition verschoben, insbesondere mittels wenigstens einer Verschiebevorrichtung des Rollenbahnsystems, insbesondere unter Nutzung wenigstens einer Führungsschiene, auf der die wenigstens eine Rollenbahn verschiebbar angeordnet ist.

Weiter vorteilhaft ist vorgesehen, dass vor dem Verbringen der wenigstens einen Rollenbahn von dem Betriebszustand in den Wartungszustand eine Sicherungseinheit bedient wird, die ausgebildet ist, die wenigstens eine Rollenbahn in der Betriebsposition und/oder in der Wartungsposition gegen ein unbeabsichtigtes Verstellen zu sichern. Erst durch das Bedienen der Sicherungseinheit ist vorteilhafterweise ein Verstellen der wenigstens einen Rollenbahn ermöglicht, insbesondere ein Verschwenken und/oder ein Verschieben.

Eine weitere vorteilhafte Ausgestaltung des Verfahrens sieht vor, dass eine Antriebswelle, die die Rollenbahnen zum Antreiben von Rollen der wenigstens einen Rollenbahn miteinander verbindet, vor dem Verbringen der wenigstens einen Rollenbahn von der Betriebsposition in die Wartungsposition von der wenigstens einen Rollenbahn getrennt wird, insbesondere durch Auftrennen eines hierfür vorgesehenen Verbindungselements. Vorteilhafterweise wird die Antriebswelle zudem aus dem Verstellweg, entlang dem die wenigstens eine Rollenbahn von der ersten Betriebsposition in die Wartungsposition verbracht wird, entfernt. Das kann insbesondere durch ein Zusammenstauchen einer teleskopierbar ausgebildeten Antriebswelle erfolgen. Alternativ kann die Antriebswelle insbesondere durch ein Verschwenken eines zweiten Antriebswellenelements, welches über ein Gelenk, insbesondere über ein Kardangelenk, mit einem ersten Antriebswellenelement verbunden ist, aus dem Verstellweg der wenigstens einen Rollenbahn entfernt werden.

Des Weiteren ist in Bezug auf das Verfahren vorteilhafterweise vorgesehen, dass das Rollenbahnsystem ein erfindungsgemäß ausgebildetes Rollenbahnsystem ist, insbesondere ein Rollenbahnsystem mit den obenstehend beschriebenen Merkmalen, die einzeln oder in Kombination bei dem Rollenbahnsystem verwirklich sein können.

Insbesondere ist ein Verfahren vorgesehen, bei dem ein Rollenbahnsystem, das eine erste auf einem Gestell angeordnete Rollenbahn und eine zweite auf dem Gestell parallel zu der ersten Rollenbahn angeordnete Rollenbahn aufweist, durch das Ausführen der folgenden Verfahrensschritte von einem Betriebszustand in einen Wartungszustand verbracht wird: Stillsetzen des Rollenbahnsystems in dem Betriebszustand, insbesondere durch ein Abstellen der Antriebseinheit; falls vorhanden, Entfernen von auf dem Rollenbahnsystem befindlichem Fördergut; Lösen einer mit der zweiten Rollenbahn verbundenen Antriebswelle; Bedienen einer Sicherungseinheit, insbesondere Lösen eines Verriegelungsmechanismus, um die zweite Rollenbahn aus der Betriebsposition herausbringen zu können; Verschieben der zweiten Rollenbahn relativ zu dem Gestell hin zu der ersten Rollenbahn bis in die Wartungsposition; Sichern der zweiten Rollenbahn in der Wartungsposition, insbesondere durch Bedienen einer Sicherungseinheit, insbesondere eines Verriegelungsmechanismus.

Zum Verbringen des Rollenbahnsystems von dem Wartungszustand zurück in die Betriebsposition werden die vorstehend genannten Schritte vorteilhafterweise in umgekehrter Reihenfolge ausgeführt. Insbesondere sind die folgenden Verfahrensschritte vorgesehen: Bedienen einer Sicherungseinheit, insbesondere Lösen eines Verriegelungsmechanismus, um die zweite Rollenbahn aus der Wartungsposition herausbringen zu können; Verschieben der zweiten Rollenbahn relativ zu dem Gestell weg von der ersten Rollenbahn bis in die Betriebsposition; Sichern der zweiten Rollenbahn in der Betriebsposition, insbesondere durch Bedienen einer Sicherungseinheit, insbesondere eines Verriegelungsmechanismus; Verbinden der Antriebswelle mit der zweiten Rollenbahn, wobei dieser Schritt insbesondere auch vor dem Sichern der zweiten Rollenbahn in der Betriebsposition vorgesehen sein kann, insbesondere dann, wenn ein über die Bedienposition hinausgehendes Verschieben der zweiten Rollenbahn möglich ist, um das Verbinden der Antriebswelle mit der zweiten Rollenbahn zu erleichtern; Starten der Antriebseinheit des Rollenbahnsystems. Voreilhafterweise wird sensorisch überwacht, ob die zweite Rollenbahn korrekt in der Betriebsposition gesichert ist, beispielsweise durch einen Kontaktschalter. Für den Fall, dass die Überwachung ergibt, dass die zweite Rollenbahn nicht korrekt in der Betriebsposition gesichert ist, wird vorteilhafterweise eine Inbetriebnahme des Rollenbahnsystems verhindert beziehungsweise wird ein Betrieb des Rollenbahnsystems gestoppt.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer perspektivischen Darstellung ein Ausführungsbeispiel für ein erfindungsgemäß ausgebildetes Rollenbahnsystem in einem Betriebszustand;
- Fig. 2: in einer perspektivischen Darstellung das Ausführungsbeispiel für ein erfindungsgemäß ausgebildetes Rollenbahnsystem gemäß Fig. 1 in einem Wartungszustand;
- Fig. 3: in einer weiteren perspektivischen Darstellung einen Ausschnitt aus dem Ausführungsbeispiel für ein erfindungsgemäß ausgebildetes Rollenbahnsystem gemäß Fig. 2;
- Fig. 4: in einer Draufsicht ein weiteres Ausführungsbeispiel für ein erfindungsgemäß ausgebildetes Rollenbahnsystem in einem Betriebszustand;
- Fig. 5: in einer Draufsicht das Ausführungsbeispiel für das erfindungsgemäß ausgebildete Rollenbahnsystem gemäß Fig. 4 in einem Wartungszustand;
- Fig. 6: in einer Frontansicht in Längserstreckungsrichtung eine schematische Darstellung eines weiteren Ausführungsbeispiels für ein erfindungsgemäß ausgebildetes Rollenbahnsystem;
- Fig. 7: in einer Frontansicht in Längserstreckungsrichtung eine schematische Darstellung eines weiteren Ausführungsbeispiels für ein erfindungsgemäß ausgebildetes Rollenbahnsystem;
- Fig. 8: in einer Frontansicht in Längserstreckungsrichtung eine schematische Darstellung eines weiteren Ausführungsbeispiels für ein erfindungsgemäß ausgebildetes Rollenbahnsystem; und
- Fig. 9: anhand eines Blockdiagramm ein Ausführungsbeispiel für ein erfindungsgemäß ausgebildetes Verfahren zum Verbringen eines Rollenbahnsystems von einem Betriebszustand in einen Wartungszustand.

In den verschiedenen Figuren sind gleiche Teile in der Regel mit den gleichen Bezugszeichen versehen und gleich dargestellt und werden daher mitunter auch jeweils nur im Zusammenhang mit einer der Figuren erläutert.

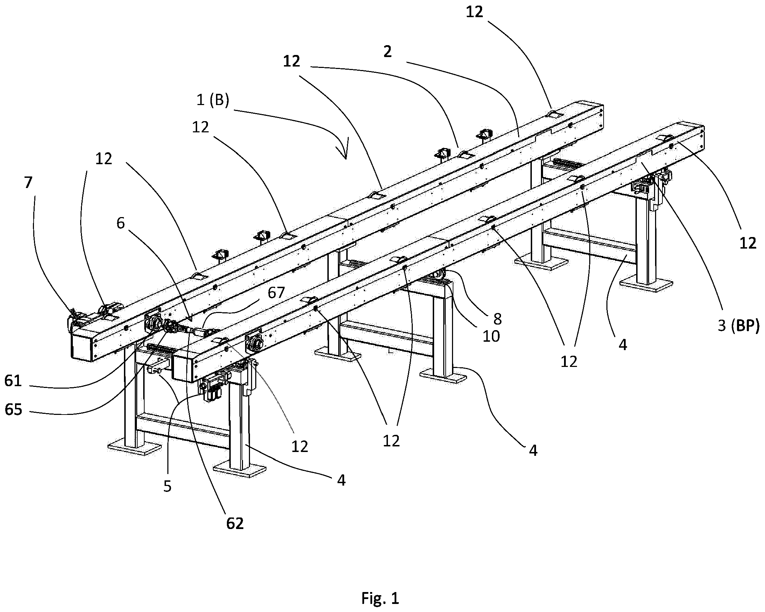

Fig. 1 bis Fig. 3 zeigen ein Ausführungsbeispiel für ein Rollenbahnsystem 1, das ausgebildet ist, von einem Betriebszustand B in einen Wartungszustand W verbracht zu werden, und umgekehrt, und somit ausgebildet ist, einen Betriebszustand B und einen Wartungszustand W einzunehmen. In Fig. 1 ist das Rollenbahnsystem 1 in einem Betriebszustand B gezeigt, wobei das Rollenbahnsystem 1 in dem Betriebszustand B zur Förderung von Fördergut ausgebildet ist.

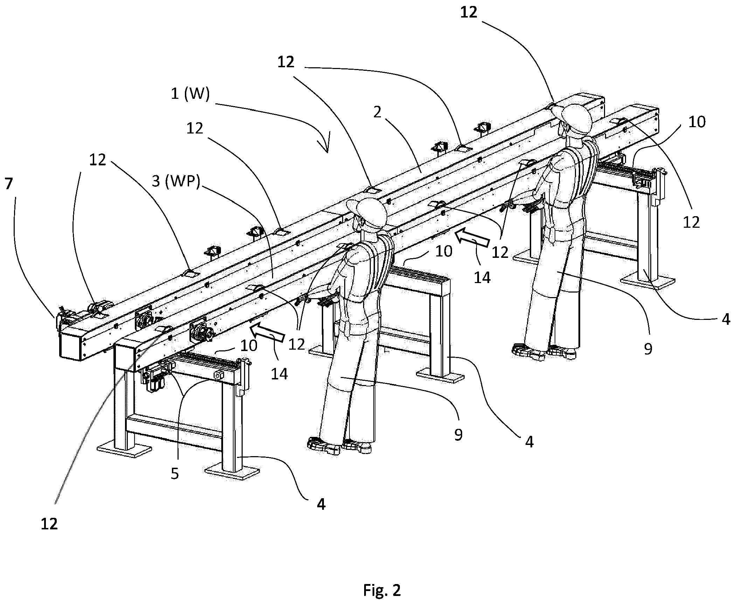

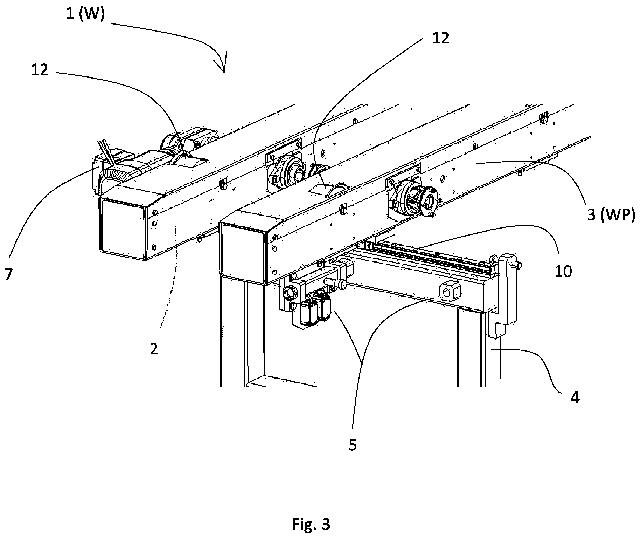

Fig. 2 und Fig. 3 zeigen dabei das Rollenbahnsystem 1 in dem Wartungszustand W, wobei in Fig. 3 ein vergrößerter Ausschnitt aus Fig. 2 dargestellt ist.

Das Rollenbahnsystem 1 umfasst ein Gestell 4, an dem eine erste Rollenbahn 2 und parallel dazu eine zweite Rollenbahn 3 angeordnet sind. Das Gestell 4 des Rollenbahnsystems 1 ist als Untergestell ausgebildet und umfasst in diesem Ausführungsbeispiel drei Tragelemente, auf denen die Rollenbahnen 2, 3 aufliegen. Die Tragelemente sind dabei aufeinanderfolgend angeordnet, wobei die Abstände zwischen den einzelnen Tragelementen in diesem Ausführungsbeispiel mehr als einen Meter betragen.

Die Rollenbahnen 2, 3 des Rollenbahnsystems 1 sind jeweils als Holm mit darin angeordneten Rollen 12, über die ein Fördergut gefördert werden kann, ausgebildet. Zur aktiven Förderung von Fördergut mittels des Rollenbahnsystems 1 umfasst das Rollenbahnsystem eine Antriebseinheit zum Antreiben der Rollen 12. Die Antriebseinheit umfasst dabei einen an der ersten Rollenbahn 2 angeordneten Antriebsmotor 7 und eine Antriebswelle 6, über die die Rollen 12 der zweiten Rollenbahn 2 von dem Antriebsmotor 7 angetrieben werden. Insbesondere ist das Rollenbahnsystem 1 gemäß diesem Ausführungsbeispiel in dem Betriebszustand B zur Förderung von sogenannten Skids als Fördergut ausgebildet. Ein Skid ist dabei insbesondere ein Rahmen, der zwei Kufen umfasst, und der zur Aufnahme von Karosseriebaugruppen ausgebildet ist. Die Kufen sind dabei derart auf das Rollenbahnsystem 1 abgestimmt, dass jeweils eine Kufe auf der jeweiligen Rollenbahn 2, 3 aufliegt, und ein Skid entsprechend von dem Rollenbahnsystem 1 gefördert werden kann.

Die erste Rollenbahn 2 des Rollenbahnsystems 1 ist in diesem Ausführungsbeispiel feststehend in Bezug auf das Gestell 4 ausgebildet. Das heißt, auch wenn das Rollenbahnsystem 1 von dem Betriebszustand B in den Wartungszustand W verbracht wird, ändert sich bei diesem Ausführungsbeispiel die Position der ersten Rollenbahn 2 nicht. Man könnte auch sagen, die erste Rollenbahn 2 ist stets in einer Betriebsposition angeordnet.

Die zweite Rollenbahn 3 ist dagegen relativ zu dem Gestell 4 verschiebbar ausgebildet. Dabei ist die zweite Rollenbahn 3 in dem Betriebszustand B in einer Betriebsposition BP angeordnet und in dem Wartungszustand W in einer von der Betriebsposition BP abweichenden Wartungsposition WP angeordnet. Zum Verschieben der zweiten Rollenbahn 3 sind auf den Tragelementen des Gestells 4 jeweils Führungsschienen 10 angeordnet, die somit orthogonal zur Längserstreckungsrichtung der Rollenbahnen 2, 3 ausgerichtet sind. In diesem Ausführungsbeispiel ist dabei unter der zweiten Rollenbahn 3 im Bereich der Führungsschiene 10, die auf dem mittleren Tragelement des Gestells 4 angeordnet ist, eine Rolle 8 angeordnet, die auf der Führungsschiene 10 läuft. Im Bereich der auf den äußeren Tragelemente des Gestells 4 angeordneten Führungsschienen 10 weist die zweite Rollenbahn 3 Führungselemente auf, die mit den Führungsschienen 10 zusammenwirken. Das heißt beim Wechsel zwischen der Betriebsposition BP und der Wartungsposition WP der zweiten Rollenbahn 3 rollt die Rolle 8 über die mittlere Führungsschiene 10 ab, wobei die zweite Rollenbahn durch die seitlichen Führungsschienen 10 geführt wird. Das Rollenbahnsystem 1 ist somit so ausgebildet, dass die zweite Rollenbahn 36 über die Führungsschienen 10 verschoben werden kann.

In Fig. 2 ist beispielhaft gezeigt, wie ein Wartungspersonal 9 die zweite Rollenbahn 3 verschiebt und somit das Rollenbahnsystem 1 von dem Betriebszustand B in den Wartungszustand W verbringt. In dem Wartungszustand W ist dabei ein Wartungsbereich 11 zugänglich, der in dem Betriebszustand B von der zweiten Rollenbahn 3 blockiert ist. Die Freiräume zwischen den Tragelementen des Gestells 4 können vorteilhafterweise zur Durchführung von Wartungsarbeiten genutzt werden, wenn die zweite Rollenbahn 3 in der Wartungsposition WP angeordnet ist. Insbesondere sind in den Freiräumen unterhalb der Rollenbahnen Vorrichtungen beziehungsweise Vorrichtungskomponenten von Vorrichtungen angeordnet, wobei mit diesen Vorrichtungen insbesondere die auf den Skids transportierten Karosserieteile bearbeitet werden können.

Damit in dem Betriebszustand B eine sichere Förderung von Fördergut mittels des Rollenbahnsystems 1 ermöglicht ist und in dem Wartungszustand W eine sichere Durchführung einer Wartung ermöglicht ist, umfasst das Rollenbahnsystem 1 in diesem Ausführungsbeispiel eine Sicherungseinheit 5, die die zweite Rollenbahn 3 gegen ein unbeabsichtigtes Verschieben sichert. In diesem Ausführungsbeispiel ist die Sicherungseinheit 5 als Verriegelungsmechanismus ausgebildet, der die zweite Rollenbahn 3 in der Betriebsposition BP und in der Wartungsposition WP automatisch verriegelt und somit gegen ein Verschieben sichert. Damit die zweite Rollenbahn 3 verschoben werden kann, muss also zuvor der Verriegelungsmechanismus bedient und die Verriegelung aufgehoben werden. In diesem Ausführungsbeispiel umfasst die Sicherungseinheit 5 zudem in der Betriebsposition BP und in der Wartungsposition WP jeweils einen Kontaktsensor (in den Figuren nicht explizit gezeigt), wobei mit dem Kontaktsensor überwacht wird, dass die zweite Rollenbahn 3 in der Betriebsposition BP beziehungsweise in der Wartungsposition WP korrekt angeordnet und gegen ein ungewolltes Verschieben gesichert ist.

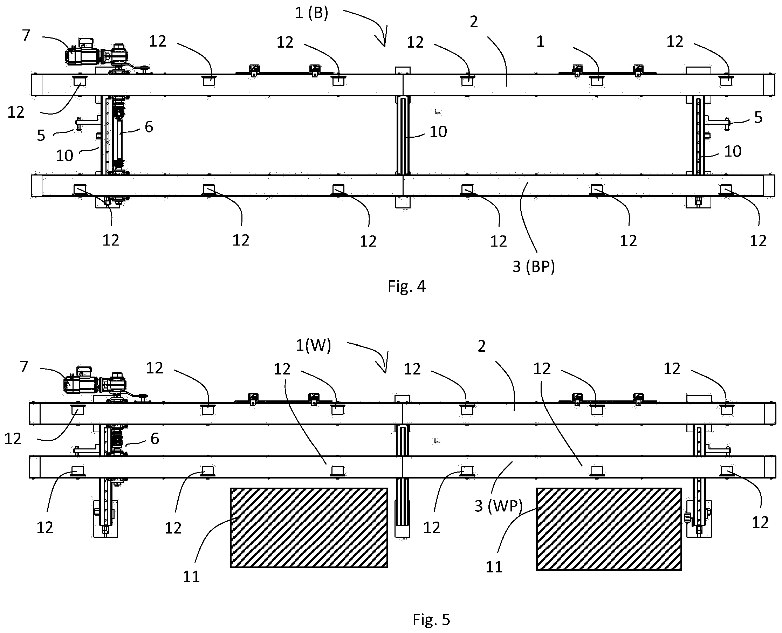

Fig. 4 und Fig. 5 zeigen ein weiteres Ausführungsbeispiel eines Rollenbahnsystems 1 in einer Draufsicht mit einer ersten Rollenbahn 2 und einer verschieblich ausgebildeten zweiten Rollenbahn 3, wobei Fig. 4 das Rollenbahnsystem 1 in dem Betriebszustand B zeigt und Fig. 5 das Rollenbahnsystem 1 in dem Wartungszustand W zeigt. In Fig. 5 ist dabei durch Schraffur ein durch das Verschieben der zweiten Rollenbahn 3 freigegebener Wartungsbereich 11 dargestellt. Als Unterschied zu dem unter Bezugnahme auf Fig. 1 bis Fig. 3 erläuterten Ausführungsbeispiel weist die Antriebseinheit des in Fig. 4 und Fig. 5 gezeigten Rollenbahnsystems 1 eine teleskopierbar ausgebildete Antriebswelle 6 auf. Diese wird beim Verschieben der zweiten Rollenbahn 3 von der Betriebsposition BP in die Wartungsposition WP zusammengestaucht und beim Verschieben der zweiten Rollenbahn 3 von der Wartungsposition WP in die Betriebsposition BP entsprechend auseinandergezogen.

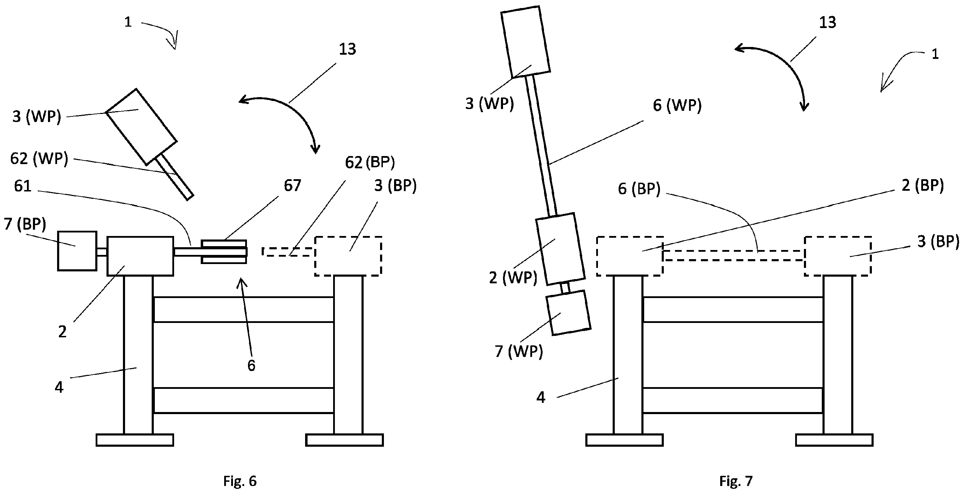

Fig. 6 zeigt ein Ausführungsbeispiel für ein erfindungsgemäß ausgebildetes Rollenbahnsystem 1 zur Förderung von Fördergut umfassend ein Gestell 4, wobei an dem Gestell 4 eine erste Rollenbahn 2 und eine zweite Rollenbahn 3 angeordnet sind. Das Rollenbahnsystem 1 umfasst eine Antriebseinheit mit einem Antriebsmotor 7 und einer Antriebswelle 6, mit denen Rollen der Rollenbahnen 2, 3 angetrieben werden können. Bei dem Rollenbahnsystem 1 ist die erste Rollenbahn 2 feststehend in Bezug auf das Gestell 4 ausgebildet. Die zweite Rollenbahn 3 ist hingegen verschwenkbar ausgebildet, das heißt, die zweite Rollenbahn 3 kann mit einer Schwenkbewegung 13 von einer Betriebsposition BP in eine Wartungsposition WP verschwenkt werden, und von der Wartungsposition WP in die Betriebsposition BP verschwenkt werden. Durch das Verschwenken der zweiten Rollenbahn 3 in die jeweilige Position BP, WP ist das Rollenbahnsystem 1 ausgebildet, einen Betriebszustand B und einen Wartungszustand W einzunehmen. Insbesondere ist auch bei dieser Ausgestaltungsvariante vorgesehen, dass die zweite Rollenbahn 3 in der jeweiligen Position BP, WP gegen ein unbeabsichtigtes Verstellen gesichert werden kann. Insbesondere ist vorgesehen, dass das Rollenbahnsystem 1 für das Verschwenken der zweiten Rollenbahn 3 eine Verschwenkvorrichtung umfasst, die in Fig. 6 allerdings nicht explizit dargestellt ist. Durch das Verschwenken der zweiten Rollenbahn 3 nach oben wird ein Wartungsbereich freigegeben.

In dem in Fig. 6 dargestellten Ausführungsbeispiel umfasst die Antriebswelle 6 der Antriebseinheit des Rollenbahnsystems 1 einen ersten Antriebswellenabschnitt 61, einen zweiten Antriebswellenabschnitt 62 und ein als Kupplung ausgebildetes Verbindungselement 67, dass den ersten Antriebswellenabschnitt 61 mit dem zweiten Antriebswellenabschnitt 62 verbindet.

Über das Verbindungselement 67 und den zweiten Antriebswellenabschnitt 62 ist die Antriebswelle 6 mit der zweiten Rollenbahn 3 verbunden. Das Verbindungselement 67 ist derart ausgebildet, dass die Verbindung zwischen dem ersten Antriebswellenabschnitt 61 und dem zweiten Antriebswellenabschnitt 62 gelöst werden kann, wenn die zweite Rollenbahn 3 von der Betriebsposition BP in die Wartungsposition WP verbracht werden soll. Da der zweite Antriebswellenabschnitt 62 an der zweiten Rollenbahn 3 angeordnet ist, wird dieser beim Verschwenken 13 der zweiten Rollenbahn 3 ebenfalls aus seiner Betriebsposition BP in ein Wartungsposition WP verschwenkt. Nachdem die zweite Rollenbahn 3 und somit der zweite Antriebswellenabschnitt 62 von der Wartungsposition wieder in die Betriebsposition verbracht ist, kann der zweite Antriebswellenabschnitt 62 mittels des Verbindungselements 67 wieder mit dem ersten Antriebswellenabschnitt 61 verbunden werden. In diesem Ausführungsbeispiel ermöglicht das Verbindungselement 67 ein werkzeugloses Lösen und Wiederherstellen der Verbindung des ersten Antriebswellenabschnitts 61 mit dem zweiten Antriebswellenabschnitt 62. Die korrekte Verbindung der Antriebswellenabschnitte 61, 62 über das Verbindungselement 67 wird vorteilhafterweise sensorisch überwacht.

In einer Ausgestaltungsvariante kann als Verbindungselement 67 auch ein Kardangelenk vorgesehen sein, mit dem der zweite Antriebswellenabschnitt 62 beim Lösen der Antriebswelle 6 von der zweiten Rollenbahn 3 abgeklappt werden kann. Das Verbindungselement 67 ist dann vorteilhafterweise näher an der ersten Rollenbahn 2 angeordnet, um auf den ersten Antriebswellenabschnitt 61 wirkende Hebelkräfte zu reduzieren. Um die Antriebswelle 6 von der zweiten Rollenbahn 3 besser lösen zu können, kann vorgesehen sein, dass die zweite Rollenbahn 3 aus der Betriebsposition BP zudem in eine weitere Position, in der die zweite Rollenbahn 3 von der ersten Rollenbahn 2 weiter beabstandet ist, also der Abstand zwischen der zweiten Rollenbahn 3 und der ersten Rollenbahn 2 vergrößert ist, verbracht werden kann. Von dieser weiteren Position aus wird die zweite Rollenbahn 3 dann in die Wartungsposition WP verbracht.

Ein weiteres Ausführungsbeispiel für ein Rollenbahnsystem 1, das ausgebildet ist, einen Betriebszustand B und einen Wartungszustand W einzunehmen, ist in Fig. 7 dargestellt. Wie bei dem unter Bezugnahme auf Fig. 6 erläuterten Ausführungsbeispiel, weist dieses Rollenbahnsystem 1 ein erste Rollenbahn 2 und eine zweite Rollenbahn 3 auf, die an einem Gestell 4 angeordnet sind. Im Unterschied zu dem Ausführungsbeispiel gemäß Fig. 6 ist dieses Rollenbahnsystem 1 allerdings ausgebildet, die erste Rollenbahn 2 und die zweite Rollenbahn 3 in einer Schwenkbewegung 13 gemeinsam zu verschwenken, um die Rollenbahnen 2, 3 von einer Betriebsposition BP in eine Wartungsposition WP zu verbringen. Zum Verschwenken der Rollenbahnen 2, 3 umfasst das Rollenbahnsystem 1 dabei eine Verschwenkvorrichtung (in Fig. 7 nicht explizit dargestellt). Beim Verschwenken der ersten Rollenbahn 2 und der zweiten Rollenbahn 3 ändert sich deren Position relativ zu dem Gestell 4. Die Position der ersten Rollenbahn 2 relativ zu der zweiten Rollenbahn 3 bleibt aber unverändert. Daher ist bei diesem Ausführungsbeispiel die Antriebswelle 6 durchgängig ausgebildet, da diese, ebenso wie der an der ersten Rollenbahn 2 angeordnete Antriebsmotor 7, zusammen mit den Rollenbahnen 2, 3 von der jeweiligen Betriebsposition BP in die Wartungsposition WP beziehungsweise von der jeweiligen Wartungsposition WP in die Betriebsposition BP verschwenkt wird. Für eine übersichtlichere Darstellung ist in Fig. 7 der Antriebsmotor nur in der Wartungsposition WP und nicht in der Betriebsposition BP dargestellt.

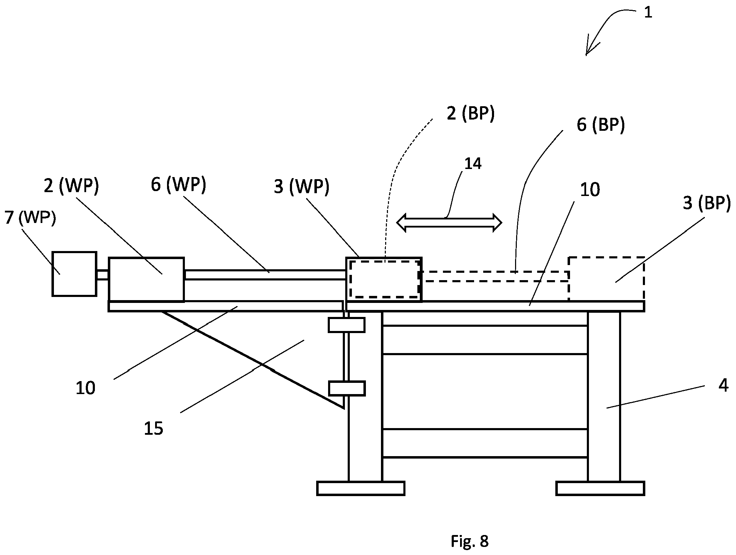

In einer in Fig. 8 dargestellten Ausgestaltungsvariante des Rollenbahnsystems 1 werden die erste Rollenbahn 2 und die zweite Rollenbahn 3 anders als bei dem Ausführungsbeispiel gemäß Fig. 7 nicht gemeinsam verschwenkt, sondern das Rollenbahnsystem 1 ist ausgebildet, die erste Rollenbahn 2 zusammen mit der zweiten Rollenbahn 3 gemeinsam in Bezug auf das Gestell 4 entsprechend einer Verschiebbewegung 14 zu verschieben, um das Rollenbahnsystem 1 in einen Betriebszustand B und in einen Wartungszustand W verbringen zu können. Zum Verschieben der Rollenbahnen 2, 3 sind diese auf Führungsschienen 10 angeordnet, wobei die erste Rollenbahn 2 in diesem Ausführungsbeispiel über ausschwenkbar ausgebildete Konsolen 15, auf denen ebenfalls jeweils eine Führungsschiene 10 angeordnet ist, über das eigentliche Gestell 4 hinaus in einer Wartungsposition WP verschoben werden kann. Die Wartungsposition WP der zweiten Rollenbahn 3 kann dann insbesondere der Betriebsposition BP der ersten Rollenbahn 2 entsprechen. Auch bei diesem Ausführungsbeispiel werden Komponenten der Antriebseinheit, insbesondere der an der ersten Rollenbahn 2 angeordnete Antriebsmotor 7 und die zwischen der ersten Rollenbahn 2 und der zweiten Rollenbahn 3 angeordnete Antriebswelle 6, zusammen mit den Rollenbahnen 2, 3 in eine Wartungsposition WP beziehungsweise in eine Betriebsposition BP verschoben. Für eine übersichtlichere Darstellung ist in Fig. 8 der Antriebsmotor nur in der Wartungsposition WP und nicht in der Betriebsposition BP dargestellt.

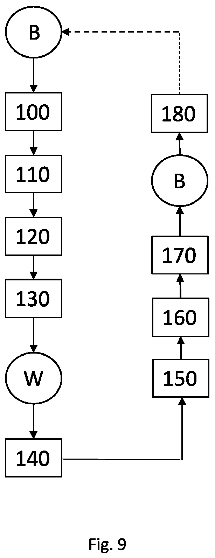

Unter Bezugnahme auf Fig. 9 wird beispielhaft ein Verfahren zum Verbringen eines Rollenbahnsystems 1 mit an einem Gestell 4 angeordneten Rollenbahnen 2, 3 von einem Betriebszustand B in einen Wartungszustand W und von einem Wartungszustand zurück in einen Betriebszustand B erläutert, wobei in diesem Ausführungsbeispiel vorgesehen ist, dass das Rollenbahnsystem 1, wie in Fig. 7 oder wie in Fig. 8 gezeigt, ausgebildet ist. Das Verfahren sieht vor, dass das in Betrieb befindliche Rollenbahnsystem 1 in einem ersten Verfahrensschritt 100 stillgesetzt wird, insbesondere durch ein Abschalten des Antriebsmotors 7. In einem weiteren Verfahrensschritt 110 wird ein Verriegelungsmechanismus zur Aufhebung der Sicherung der Rollenbahnen 2, 3 in der Betriebsposition BP gelöst. In einem Verfahrensschritt 120 werden dann die Rollenbahnen 2, 3 von der Betriebsposition BP in die Wartungsposition WP verbracht, insbesondere durch ein Verschwenken 13 oder durch ein Verschieben 14. Dann wird in einem Verfahrensschritt 130 der Verriegelungsmechanismus zur Sicherung der Rollenbahn 2, 3 in der Wartungsposition WP verriegelt. Das Rollenbahnsystem 1 befindet sich nun in dem Wartungszustand W. In einem weiteren Verfahrensschritt 140 wird nun eine Wartung durchgeführt. Nach der erfolgten Wartung wird das Rollenbahnsystem 1 wieder von dem Wartungszustand W in den Betriebszustand B verbracht. Dazu wird in einem Verfahrensschritt 150 der Verriegelungsmechanismus zur Aufhebung der Sicherung der Rollenbahnen 2, 3 in der Wartungsposition WP gelöst. In einem Verfahrensschritt 160 werden dann die Rollenbahnen 2, 3 von der Wartungsposition WP in die Betriebsposition BP verbracht. Die in der Betriebsposition BP angeordneten Rollenbahnen 2,3 werden dann in der Betriebsposition BP gesichert. Dazu wird in einem Verfahrensschritt 170 der Verriegelungsmechanismus zur Sicherung der Rollenbahnen 2, 3 in der Betriebsposition BP verriegelt. In einem weiteren Verfahrensschritt 180 kann das nun im Betriebszustand B befindliche Rollenbahnsystem 1 wieder zur Förderung von Fördergut, insbesondere von Skids, betrieben werden, insbesondere durch ein Starten des Antriebsmotors 7.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Rollenbahnsystem
- 2: erste Rollenbahn
- 3: zweite Rollenbahn
- 4: Gestell
- 5: Sicherheitseinheit
- 6: Antriebswelle
- 61: erster Antriebswellenabschnitt
- 62: zweite Antriebswellenabschnitt
- 65: Gelenk der Antriebswelle
- 67: Verbindungselement der Antriebswelle
- 7: Antriebsmotor
- 8: Rolle
- 9: Wartungspersonal
- 10: Führungsschiene
- 11: Wartungsbereich
- 12: Rolle einer Rollenbahn
- 13: Pfeil zur symbolischen Darstellung einer Schwenkbewegung
- 14: Pfeil zur symbolischen Darstellung einer Verschiebbewegung
- 15: Konsole (schenkbar)
- B: Betriebszustand
- W: Wartungszustand
- BP: Betriebsposition
- WP: Wartungsposition
- 100: Stillsetzen des Rollenbahnsystems
- 110: Lösen des Verriegelungsmechanismus
- 120: Verbringen der wenigsten einen Rollenbahn von der Betriebsposition in die Wartungsposition
- 130: Verriegeln des Verriegelungsmechanismus
- 140: Durchführung der Wartung
- 150: Lösen des Verriegelungsmechanismus
- 160: Verbringen der wenigsten einen Rollenbahn von der Wartungsposition in die Betriebsposition
- 170: Verriegeln des Verriegelungsmechanismus
- 180: Inbetriebnahme des Rollenbahnsystems

## Patentansprüche

1. Rollenbahnsystem (1) zur Förderung von Fördergut umfassend ein Gestell (4) und an dem Gestell (4) angeordnete Rollenbahnen (2, 3), **dadurch gekennzeichnet, dass** das Rollenbahnsystem (1) ausgebildet ist, einen Betriebszustand (B) und einen Wartungszustand (W) einzunehmen, wobei wenigstens eine der Rollenbahnen (3) in dem Betriebszustand (B) in einer Betriebsposition (BP) angeordnet ist und die wenigstens eine Rollenbahn (3) in dem Wartungszustand (W) in einer von der Betriebsposition (BP) abweichenden Wartungsposition (WP) angeordnet ist.

2. Rollenbahnsystem (1) nach Anspruch 1, **dadurch gekennzeichnet, dass** in dem Wartungszustand (W) ein Wartungsbereich (11), der in dem Betriebszustand (B) von zumindest einer Rollenbahn (2, 3)) blockiert ist, zugänglich ist.

3. Rollenbahnsystem (1) nach Anspruch 1 oder Anspruch 2, **dadurch gekennzeichnet, dass** das Rollenbahnsystem (1) ausgebildet ist, die wenigstens eine Rollenbahn (3) zu verschwenken und/oder zu verschieben.

4. Rollenbahnsystem (1) nach einem der vorstehenden Ansprüche, **dadurch gekennzeichnet, dass** das Gestell (4) wenigstens eine Führungsschiene (10) umfasst, die orthogonal zu den Rollenbahnen (2, 3) ausgerichtet ist, wobei das Rollenbahnsystem (1) ausgebildet ist, die wenigstens eine Rollenbahn (3) über die wenigstens eine Führungsschiene (10) zu verschieben.

5. Rollenbahnsystem (1) nach einem der vorstehenden Ansprüche, **dadurch gekennzeichnet, dass** das Rollenbahnsystem (1) eine erste Rollenbahn (2) und eine zweite Rollenbahn (3) als die Rollenbahnen umfasst, wobei die erste Rollenbahn (2) insbesondere feststehend in Bezug auf das Gestell (4) ausgebildet ist.

6. Rollenbahnsystem (1) nach Anspruch 5, **dadurch gekennzeichnet, dass** das Rollenbahnsystem (1) eine Antriebseinheit zum Antreiben von Rollen (12) der Rollenbahnen (2, 3) aufweist, wobei die Antriebseinheit einen Antriebsmotor (7) umfasst, der an der ersten Rollenbahn (2) angeordnet ist, und mit dem die Rollen (12) der ersten Rollenbahn (2) angetrieben werden können.

7. Rollenbahnsystem (1) nach Anspruch 6, **dadurch gekennzeichnet, dass** die Antriebseinheit eine Antriebswelle (6) umfasst, über die die Rollen (12) der zweiten Rollenbahn (3) mittels des Antriebsmotors (7) angetrieben werden können.

8. Rollenbahnsystem (1) nach Anspruch 7, **dadurch gekennzeichnet, dass** die Antriebswelle (6) teleskopierbar ausgebildet ist.

9. Rollenbahnsystem (1) nach Anspruch 7 oder Anspruch 8, **dadurch gekennzeichnet, dass** die Antriebswelle (6) einen ersten Antriebswellenabschnitt (61) und einen zweiten Antriebswellenabschnitt (62) umfasst, wobei der erste Antriebswellenabschnitt (61) und der zweite Antriebswellenabschnitt (62) über ein Gelenk (65) miteinander verbunden sind.

10. Rollenbahnsystem (1) nach einem der Ansprüche 7 bis 9, **dadurch gekennzeichnet, dass** die Antriebswelle (6) ein Verbindungselement (67) zur Verbindung der Antriebswelle (6) mit der zweiten Rollenbahn (3) aufweist, wobei die Verbindung zur Verbringung der zweiten Rollenbahn (3) in die Wartungsposition (WP) lösbar ausgebildet ist.

11. Rollenbahnsystem (1) nach einem der vorstehenden Ansprüche, **gekennzeichnet durch** eine Sicherungseinheit (5), die ausgebildet ist, die wenigstens eine Rollenbahn (3) in der Betriebsposition (BP) und/oder in der Wartungsposition (WP) gegen ein unbeabsichtigtes Verstellen zu sichern.

12. Verfahren zum Verbringen eines Rollenbahnsystems (1) mit an einem Gestell (4) angeordneten Rollenbahnen (2, 3) von einem Betriebszustand (B) in einen Wartungszustand (W), wobei die Rollenbahnen (2, 3) in dem Betriebszustand (B) in einer Betriebsposition (BP) angeordnet sind, **dadurch gekennzeichnet, dass** wenigstens eine der Rollenbahnen (3) von der Betriebsposition (BP) in eine von der Betriebsposition (BP) abweichende Wartungsposition (WP) verbracht wird.

13. Verfahren nach Anspruch 12, **dadurch gekennzeichnet, dass** die wenigstens eine Rollenbahn (3) von der Betriebsposition (BP) in die Wartungsposition (WP) verschwenkt und/oder verschoben wird.

14. Verfahren nach Anspruch 12 oder Anspruch 13, **dadurch gekennzeichnet, dass** eine Antriebswelle (6), die die Rollenbahnen (2, 3) zum Antreiben von Rollen (12) der wenigstens einen Rollenbahn (3) miteinander verbindet, vor dem Verbringen der wenigstens einen Rollenbahn (3) von der Betriebsposition (BP) in die Wartungsposition (WP) von der wenigstens einen Rollenbahn (3) getrennt wird.

15. Verfahren nach einem der Ansprüche 12 bis 14, **dadurch gekennzeichnet, dass** das Rollenbahnsystem (1) nach einem der Ansprüche 1 bis 13 ausgebildet ist.
